(19) Europäisches Patentamt European Patent Office Office européen des brevets

(11) **EP 4 535 028 A1**

(12) **EUROPEAN PATENT APPLICATION**
published in accordance with Art. 153(4) EPC

(43) Date of publication:
**09.04.2025 Bulletin 2025/15**

(21) Application number: **23884275.1**

(22) Date of filing: **04.07.2023**

(51) International Patent Classification (IPC):
**G01S 7/41** (2006.01)     **G06F 18/24** (2023.01)
**G01S 7/48** (2006.01)

(52) Cooperative Patent Classification (CPC):
**G01S 7/41; G01S 7/48; G06F 18/24**

(86) International application number:
**PCT/CN2023/105741**

(87) International publication number:
**WO 2024/093336 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022   CN 202211365993**

(71) Applicant: **Calterah Semiconductor Technology (Shanghai) Co., Ltd.**
**Shanghai 201210 (CN)**

(72) Inventor: **ZHANG, Xiaolong**
**Shanghai 201210 (CN)**

(74) Representative: **Penza, Giancarlo**
**Bugnion S.p.A.**
**Viale Lancetti, 17**
**20158 Milano (IT)**

(54) **METHOD AND APPARATUS FOR IMPROVING NUMBER OF REAL TARGETS CORRESPONDING TO CONSTANT FALSE ALARM TARGET, AND DEVICE**

(57)     The present application discloses a method and apparatus for determining the number of real targets corresponding to a constant false alarm target, a method for determining the number of real targets, an integrated circuit, a radio device, a terminal device, and a non-transitory computer readable storage medium. For any constant false alarm target point, by acquiring combined projection energy of real targets, energy of hypothetical targets, and energy of the constant false alarm target point on the basis of a constant false alarm target point signal vector, constructing a preset target signal vector on the basis of each obtained energy, and then determining the number of real targets corresponding to the constant false alarm target point on the basis of at least one set of preset determination coefficients, subsequent accurate direction-of-arrival estimation is facilitated.

FIG. 2

Processed by Luminess, 75001 PARIS (FR)

EP 4 535 028 A1

**Description**

Technical Field

The present application relates to the field of digital signal processing, in particular to a method and apparatus for determining the number of actual targets corresponding to constant false alarm rate targets, a method for deciding the number of actual targets, an integrated circuit, a radio equipment, a terminal device, and a non-transitory computer-readable storage medium.

Background

When the Deterministic Maximum Likelihood estimation (DML) method is used to estimate the Direction Of Arrival (DoA) to obtain the azimuth of the actual target, the number of actual targets is unknown, so it is impossible to perform accurate DoA estimation.

Summary

The present application provides a method and apparatus for determining a number of actual targets corresponding to constant false alarm rate targets, a method for deciding the number of actual targets, an integrated circuit, a radio equipment, a terminal device, and a non-transitory computer-readable storage medium to solve at least one of the above problems.

According to an aspect of the present application, a method for determining a number of actual targets corresponding to constant false alarm rate targets is proposed, the method includes: obtaining an echo signal of a signal source; constructing an echo signal decision vector for the echo signal; and determining the number of actual targets corresponding to the constant false alarm rate targets according to the echo signal decision vector and the preset decision coefficient.

According to some embodiments, constructing the echo signal vector of the echo signal includes: calculating a single target projection and a double target projection of the echo signal; calculating corresponding signal-to-noise ratio metrics of the single target projection, the double target projection, and the echo signal; and constructing the echo signal vector by using the calculated signal-to-noise ratio.

According to some embodiments, determining the number of actual targets corresponding to the constant false alarm rate target according to the echo signal decision vector and preset decision coefficients includes: calculating a decision outcome by using a pre-constructed decision formula, preset decision coefficients, and the echo signal decision vector; determining the number of actual targets corresponding to the constant false alarm rate targets according to the decision outcome.

According to some embodiments, the decision formula is represented by:

$$Z_i = w_i \cdot Y^H$$

wherein $Z_i$ is a calculation result of the decision formula, $w_i = [w_{0i}, w_{1i}, \ldots, W_{Ni}]$ are preset decision coefficients, i is number of sets of the decision coefficient, and Y is an echo signal decision vector.

According to some embodiments, determining the number of actual targets corresponding to the constant false alarm rate target according to the decision outcome includes: determining whether the number of actual targets corresponding to the constant false alarm rate target is one or two according to the result of the decision formula.

According to some embodiments, the preset decision coefficients are two sets of six-tuple parameters.

According to some embodiments, the two sets of six-tuple parameters are:

$$W1 = [-0.01, \quad -0.77, \quad 0.52, \quad 1.46, \quad -1.74],$$

$$W2 = [-0.08, \quad -0.08, \quad 0.45, \quad -0.08, \quad 7.01].$$

According to an aspect of the present application, an apparatus for determining a number of actual targets corresponding to constant false alarm rate targets is proposed, the apparatus includes: an echo signal acquisition unit used for acquiring an echo signal of a signal source; an echo signal decision vector constructing unit used for constructing an echo signal decision vector of the echo signal; a target number determining unit used for determining the number of actual targets corresponding to the constant false alarm rate targets according to the echo signal decision vector and preset decision coefficients.

An embodiment of the present application further provides a method for deciding the number of actual targets, for any constant false alarm rate target point, various actual target combination projection energies, energy of each assumed target, energy of the constant false alarm rate target point, etc. are obtained based on a signal vector of the constant false alarm rate target point, a preset target signal vector is constructed based on the above various obtained energies, and the number of actual targets corresponding to the constant false alarm rate target point is determined based on at least one set of preset decision coefficients, so as to facilitate subsequent accurate direction of arrival (DoA) estimation.

An embodiment of the present application further provides a method for deciding the number of actual targets, which can be applied to deciding the number of actual targets corresponding to any constant false alarm rate target point, wherein the method may include: presetting that the preset number of targets corresponding to the constant false alarm rate target point has at least two types, for example, in a situation of a plurality of types, the preset constant false alarm rate target point corresponds to one, two, three or more preset targets (i.e., the assumed number of corresponding actual targets). In practical applications, it will be generally preset that there are two types of situations: the constant false alarm rate target point corresponds to one or two preset actual targets. The signal vector of the constant false alarm rate target point is acquired, and the signal vector of the constant false alarm rate target point may be the target signal vector used by the direction of arrival estimation algorithm. A plurality of calculated energies are acquired based on the signal vector of the constant false alarm rate target point; the plurality of calculated energies include: energy of the constant false alarm rate target point, and single preset target projection energy, combined preset target projection energy and energy of each preset target corresponding to various types; a preset target signal vector is constructed based on the plurality of calculated energies; the preset target signal vector is judged based on a preset decision rule to determine the type of the number of preset targets corresponding to the constant false alarm rate target point.

Optionally, constructing the preset target signal vector based on the plurality of calculated energies includes: acquiring noise power; dividing the plurality of calculated energies by the noise power, respectively, and converting the dividing results into decibel values, respectively; constructing the preset target signal vector based on each of the decibel values and a preset constant.

Optionally, judging the preset target signal vector based on the preset decision rule to determine the type of the number of preset targets corresponding to the constant false alarm rate target point, includes: presetting at least one set of decision coefficients; pre-storing a decision correspondence table corresponding to each set of the decision coefficients; obtaining a plurality of decision outcomes by multiplying each set of decision coefficients by a transpose of the preset target signal vector; and determining the type of the number of the preset targets corresponding to the constant false alarm rate target points based on each of the decision outcomes and the decision correspondence table.

Optionally, the method may further include: determining, in a test environment, the decision correspondence table corresponding to each set of the decision coefficients based on the at least one preset set of decision coefficients.

Optionally, a number of elements in the preset target signal vector is equal to a number of elements in each set of the decision coefficients. For example, when the number of preset targets corresponding to the constant false alarm rate target point is preset to two types of 1 or 2, the number of elements in the preset target signal vector and the number of elements in each set of decision coefficients are both six.

Optionally, the number of preset targets corresponding to the constant false alarm rate target point is preset to two types of 1 or 2; when the number of preset targets corresponding to the constant false alarm rate target point is 1, single preset target projection energy is acquired; when the number of preset targets corresponding to the constant false alarm rate target point is 2, the following energies are acquired: double preset target projection energy, energy corresponding to one target with larger energy in the double preset targets, and energy corresponding to one target with smaller energy in the double preset targets.

The present application further provides an integrated circuit, which may include a radio frequency module, an analog signal processing module and a digital signal processing module connected in sequence; the radio frequency module is used for generating radio frequency transmission signals and receiving radio frequency reception signals; the analog signal processing module is used for performing down-frequency processing on the radio frequency reception signal to obtain an intermediate frequency signal; and the digital signal processing module is used for performing analog-to-digital conversion on the intermediate frequency signal to obtain a digital signal; wherein, the digital signal processing module is further used for deciding the number of actual targets corresponding to the constant false alarm rate target point based on the method according to any one of embodiments of the present application. Optionally, the integrated circuit is a millimeter wave chip.

An embodiment of the present application further provides a radio equipment, which may include: a carrier; the integrated circuit as described in any one of the embodiments of the present application, wherein the integrated circuit is provided on the carrier; an antenna, the antenna is provided on the carrier, or the antenna is integrated with the integrated circuit as an integral equipment provided on the carrier; wherein the integrated circuit is connected with the antenna and may be used for transmitting the radio frequency transmission signal and/or receive the radio frequency reception signal.

An embodiment of the present application further provides a terminal device, which may include: a device body; and a radio equipment according to any one of embodiments of the present application provided on the device body;

wherein the radio equipment is used for target detection and/or communication to provide reference information for operation of the device body.

According to an aspect of the present application, a non-transitory computer-readable storage medium having computer-readable instructions stored thereon is proposed, when the instructions are executed by a processor, the instructions cause the processor to perform a method as described in any one of the embodiments of the present application.

According to the embodiment of the present application, through the constructed echo signal decision vector and the preset decision coefficients, the target number of signal sources is determined according to the calculation result of the decision formula, and the accuracy of the decision of the target number of signal sources is improved.

It should be understood that the above general description and the following detailed description are merely exemplary and do not limit the present application.

Other features and advantages of the present invention will be set forth in the specification below, and in part will become apparent from the specification, or may be learned by practice the present invention. Purposes and other advantages of the present invention can be achieved and obtained by structures specifically pointed out in the specification, claims and drawings.

Brief Description of Drawings

Drawings are used to provide a further understanding of technical solutions of the present application, form a part of the specification, and are used to explain the technical solutions of the present application together with the embodiments of the present application and are not intended to form limitations on the technical solutions of the present application.

In order to more clearly explain the technical solutions in the embodiments of the present application, the drawings that need to be used in the description of the embodiments will be briefly introduced below. The above and other objects, features, and advantages of the present application will become more apparent from the detailed description of example embodiments thereof with reference to the drawings.

FIG. 1 is a schematic diagram of an application environment according to an exemplary embodiment of the present application.

FIG. 2 is a flowchart of a method for determining number of actual targets corresponding to constant false alarm rate targets according to an example embodiment of the present application.

FIG. 3 is a flowchart of a method for constructing an echo signal decision vector according to an example embodiment of the present application.

FIG. 4 is a block diagram of an apparatus for determining a number of actual targets corresponding to constant false alarm rate targets according to an example embodiment of the present application.

Detailed Description

Example embodiments will now be described more fully with reference to the drawings. However, the example embodiments can be implemented in a variety of forms and should not be construed as limited to the embodiments set forth herein; rather, these embodiments are provided so that the present application will be comprehensive and complete, and the concept of the example embodiments will be fully conveyed to those skilled in the art. In the drawings, the same reference numerals denote the same or similar parts, and thus repeated description thereof will be omitted.

The described features, structures, or characteristics may be incorporated in any suitable manner in one or more embodiments. In the following description, numerous specific details are provided to give a thorough understanding of embodiments of the present disclosure. However, those skilled in the art will appreciate that the technical solutions of the present disclosure may be practiced without one or more of these specific details, or may be practiced by using other methods, components, materials, apparatuses, operations, etc. In these situations, well-known structures, methods, apparatuses, implementations, materials, or operations will not be shown or described in detail.

The flowcharts shown in the drawings are merely illustrative and do not necessarily include all contents and operations/steps, and the flowchart does not necessarily need to be performed in the order described. For example, some operations/steps may also be decomposed, while some operations/steps may be combined or partially combined, so the order of actual execution may be changed according to the actual situation.

The terms "first" "second" and the like in the specification and claims and the above drawings of the present application are used to distinguish different objects, and are not used to describe a specific order. Furthermore, the terms "including" and "having", as well as any variations thereof, are intended to cover non-exclusive inclusions. For example, a process, method, system, product, or device comprising a series of steps or units is not limited to the listed steps or units, but optionally further includes steps or units not listed, or optionally further includes other steps or units inherent to the process, method, product, or device.

An embodiment of the present application discloses a method for deciding the number of actual targets, which may be mainly applied to FMCW radar (e.g. millimeter-wave radar, laser radar, etc.), for a situation of a same velocity and same range (or approximately a same velocity and same range, for example, a situation considered as approximately the same velocity and same range when the detection goes beyond a detection precision range) after a constant false alarm rate detection, that is, when one constant false alarm rate target point may correspond to two or three or more different actual targets, it is necessary to further confirm the decision of the number of actual targets corresponding to each constant false alarm rate target, so as to facilitate the subsequent estimation of the direction of arrival based on the maximum likelihood estimation. The method for deciding the number of actual targets in the embodiments of the present application may be applied to any constant false alarm rate target point, and the method may include: presetting the number of targets corresponding to the constant false alarm rate target point to have at least two types; acquiring a signal vector of the constant false alarm rate target point; acquiring a plurality of calculated energies based on the signal vector of constant false alarm rate target point, wherein the plurality of calculated energies include: energy of the constant false alarm rate target point, and the following energies corresponding to various types: single preset target projection energy, combined preset target projection energy, and energy of each preset target; constructing a preset target signal vector based on the single preset target projection energy, the combined preset target projection energy and the energy of each preset target; and judging the preset target signal vector based on a preset decision rule to determine the type of the number of preset targets corresponding to the constant false alarm rate target point.

In a type of embodiments, firstly, for any constant false alarm rate target, it is possible to preset (or assume) a plurality types of situations that the constant false alarm rate target point corresponds to one actual target, two actual targets, three actual targets, or more actual targets, and specifically how many types the constant false alarm rate target point are corresponding to may be set according to an actual situation, and the embodiments of the present application does not limit this. However, for sake of simplicity of explanation, in subsequent explanation, two situations in which one constant false alarm rate target point corresponds to one actual target or two actual targets are described as examples, but this should not be understood as a limitation on the solutions of the present application.

Secondly, a signal vector X of the constant false alarm rate target point may be obtained, and the signal vector of the constant false alarm rate target point may be the target signal vector used by the direction of arrival estimation algorithm.

Then, based on the signal vector X of the constant false alarm rate target point, a plurality of calculated energies, e.g. the energy of the constant false alarm rate target point, and the single preset target projection energy, the combined preset target projection energy, and the energy of each preset target corresponding to each type can be acquired. For example, single target projection $P_{00}$ of a signal vector X, double target projection $P_{12}$ of the signal vector X, energy $P_1$ corresponding to a target with larger energy among the two targets, energy $P_2$ corresponding to a target with smaller energy among the two targets, energy $P_X$ of the signal vector X, etc.

Then, a preset target signal vector is constructed based on the above-described plurality of calculated energies. In a type of embodiments, the above single target projection $P_{00}$ of the signal vector X, the double target projection $P_{12}$ of the signal vector X, the energy $P_1$ corresponding to the target with the larger energy among the two targets, the energy $P_2$ corresponding to the target with the smaller energy among the two targets, the energy $P_X$ of the signal vector X, etc. may be divided by noise estimation $P_n$ and taken a db domain expression to obtain each element of the preset target signal vector Y, i.e. $SNR_{00}$, $SNR_{12}$, $SNR_1$, $SNR_2$ and $SNR_X$ etc., so as to obtain the preset target signal vector Y as: $Y=[SNR_{00}, SNR_{12}, SNR_1, SNR_2, SNR_X, A]$; wherein A is a constant, for example, A may equals to 1, etc.

Finally, the preset target signal vector may be judged based on a preset decision rule to determine the type of the number of the preset targets corresponding to the constant false alarm rate target points.

In an exemplary example, in the method for deciding the number of actual targets according to the embodiments of the present application, constructing the preset target signal vector based on the single preset target projection energy, the combined preset target projection energy and the energy of each preset target may include: obtaining noise power; dividing the single preset target projection energy, the combined preset target projection energy and the energy of each preset target respectively by the noise power and then respectively converting the dividing results into corresponding decibel values; constructing a preset target signal vector based on the decibel values and a preset constant.

In an exemplary example, in the method for deciding the number of actual targets according to the embodiments of the present application, judging the preset target signal vector based on the preset decision rule to determine the type of the number of preset targets corresponding to the constant false alarm rate target point may include: presetting at least one set of decision coefficients; pre-storing a decision correspondence table corresponding to each set of decision coefficients; multiplying each set of decision coefficients by a transpose of the preset target signal vector to obtain a plurality of decision outcomes; and determining the type of the number of preset targets corresponding to the constant false alarm rate target point based on each decision outcome and the decision correspondence table.

In an exemplary example, the method for deciding the number of actual targets according to the embodiments of the present application may further include: determining a decision correspondence table corresponding to each set of decision coefficients in a test environment based on at least one preset set of decision coefficients.

In an exemplary example, in the method for deciding the number of actual targets according to the embodiments of the present application, the number of elements in the preset target signal vector is equal to the number of elements in each set of decision coefficients.

In an embodiment, the number of preset targets corresponding to the preset constant false alarm rate target points is 1 or 2. When the number of preset targets corresponding to the constant false alarm rate target point is 1, the single preset target projection energy is acquired; when the number of preset targets corresponding to the constant false alarm rate target point is 2, the double preset target projection energy, energy corresponding to a target with larger energy of the double preset targets and energy corresponding to a target with smaller energy of the double preset targets are acquired.

In an embodiment, one or more sets of decision coefficients may be pre-configured as: $w_i = [w_{0i}, w_{1i}, w_{2i}, w_{3i}, w_{4i}, w_{5i}]$, wherein $i = 0, 1, ..., N - 1$; then, $Z_i = w_i \cdot Y^H$ may be calculated, and the number of actual targets corresponding to the current constant false alarm rate target is determined by the results of $Z_i$. For example, when it is determined that all the results satisfy inequality $Z_i \geq 0$ based on the predetermined decision coefficients, it can be determined that the number of actual targets corresponding to constant false alarm rate target in the current situation is 1, and in practice, the calculated result may be a result satisfying $Z_i < 0$, in this situation, it can be determined that the current constant false alarm rate target corresponds to two actual targets (that is, assuming that in the current situation, one constant false alarm rate target can only correspond to two actual targets at most). It should be noted that the above judgment rule may vary depending on the set decision coefficients, for example, in a situation of inequality $Z_i \geq 0$, it is determined that the number of actual targets corresponding to one current constant false alarm rate target is 2 in the current situation. Therefore, in practical application, after determining the decision coefficients, decision rules matching with the decision coefficients may be obtained according to the applied scene, combined with the test experiment scene and/or big data analysis and the like, or, a list of different decision coefficients may be generated in advance, so as to retrieve corresponding decision rules according to different decision coefficients in practical application, and decide the number of actual targets.

The following takes the vehicle-mounted radar as an example to introduce the relevant technical contents of the present application in detail:

as radar (e.g. millimeter-wave radar, etc.) is more and more widely used in the fields of autonomous driving, security and unmanned aerial vehicles, higher requirements are puts forward for precision of angle measurement (e.g. azimuth and/or elevation) and the like of radar in the application process.

When DML is used for DoA estimation, the algorithm formula of maximum likelihood estimation of incoming wave direction is shown as formula (1):

$$\hat{\theta} = \arg\max_{\theta} \mathrm{tr}\left(P_{A(\theta)}\hat{R}\right) = \arg\max_{\theta}\left(X^H A(\theta)\left(A(\theta)^H A(\theta)\right)^{-1} A(\theta)^H X\right) \quad (1)$$

In formula (1), $P_{A(\theta)} = A(\theta)(A^H(\theta)A(\theta)^{-1}A^H(\theta)$, $A(\theta)$ is a steering vector matrix composed of the steering vectors corresponding to the angles at which the actual targets are located.

At the same time, when the number of actual targets is D, $A(\theta)$ may be expressed by the following formula, i.e.: $A(\theta) = [sv(\theta_1), sv(\theta_2), ... , sv(\theta_D)]$; wherein $sv(\theta)$ represents the steering vector corresponding to the angle $\theta$, and $\theta$ is the azimuth.

According to the above DML algorithm formula (1), it can be seen that it is not possible to construct $A(\theta)$ correctly without knowing the number of actual targets, therefore, it is impossible to reliably estimate the direction angle of the actual target.

In order to solve the above problems, MUSIC algorithm or Capon algorithm may generally be used. However, MUSIC algorithm performs eigenvector decomposition on the signal correlation matrix, and determines the target number by deciding the energy distribution of the corresponding eigenvalues, the MUSIC algorithm requires a large amount of computation. Capon algorithm determines the target number by calculating the covariance matrix and performing statistics on number of spectral peaks. When the signal-to-noise ratio of the signal is small, the estimation deviation of the Capon algorithm is large.

Regarding the above problems, the inventors of the present application propose a method for determining the number of actual targets corresponding to constant false alarm rate targets, regarding the constant false alarm rate targets obtained by constant false alarm rate (CFAR) processing, the number of assumed actual targets can be determined by using the situations of assumed number of actual targets and corresponding power projection calculation method based on obtained noise power, and then the number of actual targets corresponding to each constant false alarm rate target can be accurately determined on the basis of traditional DML, so that the number of actual targets are determined to correctly construct A(θ), i.e. the steering vector matrix composed of the steering vectors corresponding to the angles of the actual targets, on the basis of a smaller computation amount. At the same time, when signal-to-noise ratio of the signal is small, high-precision estimation of the number of the actual targets and angle and the like can also be achieved.

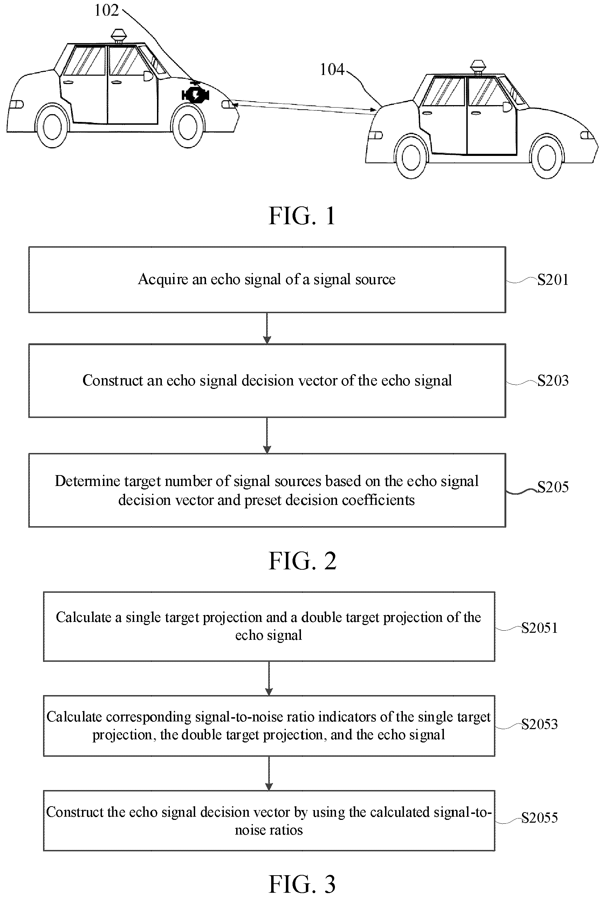

According to an embodiment of the present application, the method may be applied to an application environment as shown in FIG. 1. The radar 102 transmits a detection signal to the actual target 104, the detection signal is reflected and/or refracted by the actual target 104 to form an echo signal, and after the radar 102 receives the echo signal, the radar 102 may perform analog-to-digital conversion and sampling on the echo signal, and then perform digital signal processing such as range FFT, velocity FFT and constant false alarm rate detection, etc. to obtain at least one or more estimated target points (i.e. constant false alarm rate targets), and perform the direction of arrival estimation based on the constant false alarm rate targets.

Since the previous two-dimensional (2D)-FFT are only processes regarding the range dimension and velocity dimension of the target, so when different actual targets at the same range and same velocity (or approximately at the same range and same velocity in the radar precision range) exist in a real scene, the different actual targets will correspond to a same constant false alarm rate target, that is, one constant false alarm rate target may correspond to one, two or more actual targets at the same range and velocity, and a subsequent direction of arrival estimation is achieved by angle estimation based on the number of actual targets. Therefore, before the subsequent direction of arrival estimation processing, it is necessary to further determine the number of actual targets corresponding to each constant false alarm rate target.

According to an exemplary embodiment of the present application, the constant false alarm rate target corresponding to actual targets 104 having the same range and same velocity (or approximately the same) is processed to obtain the number of the actual targets 104, so as to facilitate subsequent accurate calculation of incoming wave direction for each actual target.

According to the embodiment of the present application, the number of actual targets is determined according to the result obtained according to the decision method by the constructed echo signal decision vector and the preset decision coefficients, so as to effectively improve the accuracy of the subsequent angle estimation.

In order to make the above objects, features, and advantages of the present application more obvious and easy to understand, various non-limiting implementations of the embodiments of the present application will be illustrated below with reference to the drawings. Based on the embodiments in the present application, other embodiments obtained by those ordinary skilled in this field without making inventive work are all within the scope of protection of the present application.

Hereinafter in combination with the attached drawings, examples are taken to illustrate the situation in which one constant false alarm rate target corresponds to one actual target or two actual targets.

FIG. 2 is a flowchart of a method for determining number of actual targets corresponding to constant false alarm rate targets according to an example embodiment of the present application. According to an exemplary embodiment of the present application, the method shown in FIG. 2 is used to determine whether the number of the actual targets corresponding to each of the constant false alarm rate target is one or two.

In step S201, an echo signal of a signal source is acquired.

According to some embodiments, the echo signal is represented by formula (2):

$$X(t) = [x_1(t), x_2(t), \ldots, x_M(t)]^T \qquad (2)$$

In formula (2), M is the number of antenna virtual elements, and X is an echo signal vector.

In step S203, an echo signal decision vector of the echo signal is constructed.

According to an embodiment of the present application, step S203 may include: first, calculating a single target projection and a double target projection of an echo signal, respectively, then calculating corresponding signal-to-noise ratio metrics by using the single target projection, the double target projection, and the echo signal vector, and finally constructing an echo signal decision vector of the echo signal by using the calculated signal-to-noise ratio metrics, the constructed echo signal decision vector is shown in formula (3).

$$Y = [SNR_{00}, SNR_{12}, SNR_1, SNR_2, SNR_X, 1] \qquad (3)$$

In step S205, the target number of signal sources is determined based on the echo signal decision vector and preset decision coefficients.

According to some embodiments, the preset decision coefficients are two sets of six-tuple parameters. For example, the two sets of six-tuple parameters are: W1 = [-0.01,-0.77, 0.52, 1.46,-1.74] and W2 = [-0.08,-0.08, 0.45,-0.08, 7.01], respectively.

Table 1 shows a type of judgment coefficients according to an embodiment of the present application.

| w0 | w1 | w2 | w3 | w4 | w5 |
|---|---|---|---|---|---|
| -0.595376 | -0.008169 | -0.770838 | 0.528333 | 1.458042 | -1.740997 |
| -0.086840 | -0.083186 | -0.077597 | 0.446295 | -0.076249 | 7.007230 |

formula (4) shows a decision formula according to an example embodiment of the present application, and according to some embodiments, a decision outcome is calculated by formula (4) using the preset decision coefficients and the echo signal decision vector, and then the number of actual targets corresponding to the constant false alarm rate target is determined according to the calculated decision outcome.

$$Z_i = w_i \cdot Y^H \qquad (4)$$

In formula (4), $Z_i$ is the calculated decision outcome, Y is the echo signal decision vector, $w_i = [w_{0i}, w_{1i}, w_{2i}, w_{3i}, w_{4i}, w_{5i}]$, i = 0,1, ... , N - 1, N is the number of sets of decision coefficients.

According to the exemplary embodiment of the present application, when formula (4) uses the decision coefficients shown in Table 1 to calculate the decision outcome, when the decision outcome values of the two sets of decision coefficients have a same sign, the number of targets of the constant false alarm rate target is 1; when the decision outcome values of the two sets of decision coefficients have different signs, the number of targets of the constant false alarm rate target is 2.

For example, when the result value of the decision formula is greater than zero or less than zero at the same time, the number of targets of the constant false alarm rate target is 1.

For another example, when some result values of the decision formula are greater than zero and some are less than zero, the number of targets of the constant false alarm rate target is 2.

Here, it should be noted that the final target number value is related to the result value of the decision formula, that is, to the sign of the decision coefficients. Therefore, determining the number of actual targets corresponding to the constant false alarm rate targets according to the calculated decision outcome value as described above is only one example. According to the other embodiments, if each value of decision coefficients and each value of the decision coefficients in Table 1 are opposite numbers to each other, the result of the decision as described above is completely opposite. Therefore, the relationship between the final number of targets of the constant false alarm rate target and the result value of the decision formula is determined by the decision coefficients.

In addition, in the embodiment shown in FIG. 2, two sets of decision coefficients are provided, and whether the final number of actual targets corresponding to the constant false alarm rate target is one or two is determined by a decision formula. According to the other embodiments, it is also possible to determine that the number of actual targets corresponding to the constant false alarm rate target is one, two, or three by a plurality of sets of decision coefficients, for example, three sets.

According to the embodiment shown in FIG. 2, through the constructed echo signal decision vector and the preset decision coefficient, the number of actual targets corresponding to the constant false alarm rate target is determined according to the result obtained by the decision method, so as to effectively improve the accuracy of subsequent angle estimation.

FIG. 3 is a flowchart of a method for constructing an echo signal decision vector according to an example embodiment of the present application, and the method for constructing the echo signal decision vector according to an example embodiment of the present application will be described in detail below, taking FIG. 3 as an example.

In step S2051, a single target projection and a double target projection of the echo signal are calculated.

According to some embodiments, the single target projection of the echo signal is calculated by formula (5), that is, a maximum value of the target signal energy when the number of targets corresponding to the constant false alarm rate target is assumed to be 1.

$$P_{00} = \max_{\theta} \frac{\|X^H \cdot sv(\theta)\|^2}{sv(\theta)^H sv(\theta)} \qquad (5)$$

In formula (5), $\theta$ is [-90°, 90°], $sv(\theta)$ is a steering vector corresponding to an angle $\theta$, X is an echo signal decision vector, $sv(\theta)^H$ is a transpose of the steering vector.

According to some embodiments, the double target projection is calculated by formulas (5) to (7), that is, the target signal energy value when the number of targets corresponding to the constant false alarm rate target is 2, wherein P12 is a maximum value after traversing angle value of each target by formula (6) when the number of corresponding targets is 2, P1 is a maximum value after traversing the angle value of each target according to formula (7) when the number of corresponding targets is 2, and P2 is a minimum value after traversing the angle value of each target according to formula (8) when the number of corresponding targets is 2.

$$P_{12} = \max_{\theta} \left( X^H A(\theta) \left( A(\theta)^H A(\theta) \right)^{-1} A(\theta)^H X \right) \tag{6}$$

$$P_1 = \max\{|coef(0)|^2 \cdot sv(\theta_0)^H sv(\theta_0), |coef(1)|^2 \cdot sv(\theta_1)^H sv(\theta_1)\} \tag{7}$$

$$P_2 = \min\{|coef(0)|^2 \cdot sv(\theta_0)^H sv(\theta_0), |coef(1)|^2 \cdot sv(\theta_1)^H sv(\theta_1)\} \tag{8}$$

wherein $\theta_0$ is [-90°, 90°], $\theta_1$ is [-90°, 90°], $coef = (A(\theta)^H A(\theta))^{-1} A(\theta)^H X$, $A(\theta) = [sv(\theta_0), sv(\theta_1)]$, $sv(\theta_0)$ is the steering vector of the first target, $sv(\theta_1)$ is the steering vector of the second target.

In step S2053, corresponding signal-to-noise ratio metrics of the single target projection, the double target projection, and the echo signal are calculated.

According to the embodiments of the present application, the corresponding signal-to-noise ratio metrics of the single target projection, the double target projection and the echo signal may be calculated by formulas (9) to (13).

$$SNR_{00} = 10 \times \log_{10}(\frac{P_{00}}{P_n}) \tag{9}$$

$$SNR_{12} = 10 \times \log_{10}(\frac{P_{12}}{P_n}) \tag{10}$$

$$SNR_1 = 10 \times \log_{10}(\frac{P_1}{P_n}) \tag{11}$$

$$SNR_2 = 10 \times \log_{10}(\frac{P_2}{P_n}) \tag{12}$$

$$SNR_X = 10 \times \log_{10}(\frac{P_X}{P_n}) \tag{13}$$

wherein, $P_X = \|X^H \cdot X\|^2$.

In step S2055, the echo signal decision vector is constructed by using the calculated signal-to-noise ratios, and the constructed echo signal decision vector is [$SNR_{00}$, $SNR_{12}$, $SNR_1$, $SNR_2$, $SNR_X$, 1].

The embodiments of the present application have been described above mainly from the perspective of methods. Those skilled in the art will readily appreciate that the operations or steps of the various examples described in connection with the embodiments disclosed herein can be implemented in the form of hardware or a combination of hardware and computer software. Those skilled in the art may use different ways to implement the described functions for each particular operation or method, and such implementation should not be considered beyond the scope of the present application.

Hereinafter, an embodiment of an apparatus of the present application will be described. For details not described in the embodiments of the apparatus of the present application, reference may be made to the embodiments of the method of the present application.

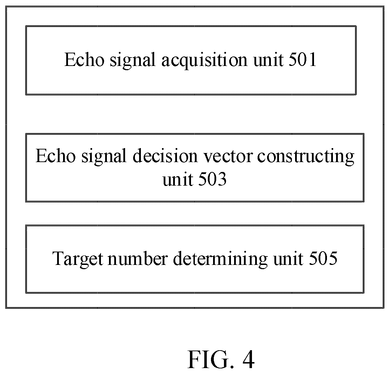

FIG. 4 shows a block diagram of an apparatus for determining the number of actual targets corresponding to constant false alarm rate targets according to an example embodiment of the present application. The apparatus shown in FIG. 4 includes an echo signal acquisition unit 501, an echo signal decision vector constructing unit 503 and a target number determining unit 505, wherein the echo signal acquisition unit 501 is used for acquiring an echo signal of a signal source, the echo signal decision vector constructing unit 503 is used for constructing an echo signal decision vector of the echo signal, and the target number determining unit 505 is used for determining the number of actual targets corresponding to the constant false alarm rate targets according to the echo signal decision vector and preset decision coefficients.

In an optional embodiment, the present application further provides an integrated circuit, which may include a radio frequency module, an analog signal processing module and a digital signal processing module connected in sequence; the radio frequency module is used for generating radio frequency transmission signals and receiving radio frequency reception signals; the analog signal processing module is used for performing down-frequency processing on the radio frequency reception signal to obtain an intermediate frequency signal; the digital signal processing module is configured to perform analog-to-digital conversion on the intermediate frequency signal to obtain a digital signal, and perform processing on the digital signal according to the method described in any one embodiment of the present application to obtain the number of actual targets corresponding to each constant false alarm rate target, and may further perform subsequent direction of arrival estimation based on the determined number of actual targets, thereby effectively improving the accuracy of angle estimation of the actual targets.

In an optional embodiment, the above integrated circuit may be a millimeter wave radar chip. The types of digital signal processing modules in the integrated circuit can be determined according to the actual requirements. For example, in the millimeter wave radar chip, the digital signal processing module may be used for operations such as range Doppler transform, velocity Doppler transform, constant false alarm rate detection, direction of arrival detection, point cloud processing, etc., for obtaining information such as range, angle, velocity, shape, size, surface roughness and dielectric characteristics of the target.

Optionally, the integrated circuit may be of an Antenna-In-Package (AiP) chip structure, an Antenna-On-Package (AoP) chip structure, or an Antenna-On-Chip (AoC) chip structure.

In an alternative embodiment, when the integrated circuit is of chip structures, the chip structures may be bonded to each other to form a cascade structure.

In some optional embodiments, the present application further provides a radio equipment including: a carrier; an integrated circuit as described in any of the above embodiments, the integrated circuit may be provided on the carrier; an antenna, the antenna is provided on the carrier, or the antenna is integrated with the integrated circuit as an integral device provided on the carrier (i.e., at this situation, the antenna may be an antenna provided in an AiP, AoP or AoC structure); herein, the integrated circuit is connected with the antenna (i.e., at this situation, the sensor chip or the integrated circuit such as a conventional SoC is not integrated with the antenna), and is used for receiving and transmitting radio signals. Wherein, the carrier may be a printed circuit board (PCB), and a first transmission line may be a PCB trace.

In some optional embodiments, the present application further provides a terminal device, including: a device body; and a radio equipment as set forth in any of the above embodiments disposed on the device body; herein, the radio equipment can be used to implement functions such as target detection and/or wireless communication.

Specifically, on the basis of the embodiments described above, in an optional embodiment of the present application, the radio equipment may be provided outside or inside the device body, while in other optional embodiments of the present application, the radio equipment may be partially provided inside the device body and partially provided outside the device body. The embodiments of the present disclosure are not limited thereto, it all depends specifically.

In an optional embodiment, the above device body may be components and products applied to fields such as smart cities, smart houses, transportation, smart homes, consumer electronics, security monitoring, industrial automation, in-cabin detection (such as smart cockpits), medical devices and health care. For example, the device body can be smart transportation device (such as automobiles, bicycles, motorcycles, ships, subways, trains, etc.), security device (such as cameras), liquid level/flow rate detection device, smart wearable device (such as bracelets, glasses, etc.), smart home device (such as sweeping robots, door locks, televisions, air conditioners, smart lights, etc.), various communication devices (such as mobile phones, tablet computers, etc.), as well as road gates, smart traffic lights, smart signs, traffic cameras and various industrial mechanical arms (or robots), etc. The device body can be various instruments for detecting vital signs parameters and various devices equipped with the instruments, such as vital signs characteristics detection in automobile cabins, indoor personnel monitoring, intelligent medical devices, consumer electronic devices, etc.

It should be noted that, the radio equipment may achieve functions such as target detection and/or communication by transmitting and receiving radio signals to provide detection target information and/or communication information to the device body, thereby assisting or even controlling the operation of the device body.

For example, when the above-mentioned device body is applied to advanced driving assistance system (ADAS), the radio equipment (such as millimeter wave radar) as on-board sensor can assist ADAS system to achieve application scenarios such as adaptive cruise, autonomous emergency braking (AEB), blind spot detection (BSD), lane change assist (LCA), rear cross traffic alert (RCTA), parking assistance, rear vehicle warning, collision avoidance (such as door opening warning/collision avoidance, etc.), pedestrian detection, etc.

From the above description of the embodiments, it will be readily understood by those skilled in the art that the example embodiments described herein may be implemented by software, or may be implemented by software in combination with necessary hardware. The technical solution according to the embodiments of the present application may be embodied in the form of a software product, the software product may be stored in a non-volatile storage medium (which may be a CD-ROM, a U disk, a mobile hard disk, etc.) or on a network, and the software product includes several instructions to cause a computing device (which may be a personal computer, a server, or a network device, etc.) to perform the above method according to embodiments of the present application.

The software product may employ any combination of one or more readable media. The readable medium may be a readable signal medium or a readable storage medium. The readable storage medium may be, for example, but is not limited to, an electrical, magnetic, optical, electromagnetic, infrared, or semiconductor system, apparatus, or equipment, or a combination of any of the above. More specific examples (a non-exhaustive list) of readable storage media include an electrical connection having one or more traces, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

The computer-readable storage medium may include a data signal propagated in a baseband or as part of a carrier wave with readable program code carried therein. Such propagated data signals may take a variety of forms, including, but not limited to, electromagnetic signals, optical signals, or any suitable combination of the above. The readable storage medium may also be any readable medium other than a readable storage medium, the readable storage medium may transmit, propagate, or transmit a program for use by or in connection with an instruction execution system, apparatus, or equipment. The program code contained on the readable storage medium may be transmitted using any suitable medium, including, but not limited to, wireless, wired, fiber optic cable, RF, etc., or any suitable combination of the above.

The program code for performing the operations of the present application may be written in any combination of one or more programming languages, the programming languages include object-oriented programming languages, such as Java, C + +, and the like, as well as conventional procedural programming languages, such as the "C" language or similar programming languages. The program code may be executed entirely on the user computing device, executed partially on the user device, executed as a stand-alone software package, executed partially on the user computing device and partially on a remote computing device, or executed entirely on a remote computing device or server. In a situation that a remote computing device is involved, the remote computing device may be connected to the user computing device over any kind of network, including a local area network (LAN) or a wide area network (WAN), or may be connected to an external computing device (e.g., using an Internet service provider to connect over the Internet).

The above computer-readable medium carries one or more programs, and when the one or more programs are executed by one of the devices, the one or more programs causes the computer-readable medium to implement the aforementioned functions.

Those skilled in the art can understand that the above modules may be distributed in the apparatus according to the description of the embodiments, or may be changed accordingly to distribute in one or more apparatus different from the present embodiment. The modules of the above embodiments may be merged into one module, or may be further split into a plurality of sub-modules.

According to an embodiment of the present application, a type of computer programs including computer programs or instructions is proposed, when the computer programs or instructions are executed by a processor, the above method may be performed.

The embodiments of the present application have been described in detail above, and the principles and embodiments of the present application have been described herein by applying specific examples, and the description of the above embodiments is only for helping to understand the methods and core ideas of the present application. At the same time, changes or modifications made by those skilled in the art according to the ideas of the present application and based on the specific embodiments and scope of application of the present application fall within the scope of protection of the present application. In general, the contents of the present specification should not be understood as limiting the present application.

**Claims**

1. A method for determining number of actual targets corresponding to a constant false alarm rate (CFAR) target, comprising:

   acquiring an echo signal of a signal source;
   constructing an echo signal decision vector of the echo signal; and
   determining the number of the actual targets corresponding to the constant false alarm rate target according to the echo signal decision vector and preset decision coefficients.

2. The method according to claim 1, wherein constructing the echo signal decision vector of the echo signal comprises:

   calculating a single target projection and a double target projection of the echo signal;
   calculating corresponding signal-to-noise ratio metrics of the single target projection, the double target projection, and the echo signal; and
   constructing the echo signal decision vector by using the calculated signal-to-noise ratio.

3. The method according to claim 1, wherein determining the number of the actual targets corresponding to the constant false alarm rate target according to the echo signal decision vector and preset decision coefficients comprises:

calculating a decision outcome by using a pre-constructed decision formula, the preset decision coefficients and the echo signal decision vector; and
determining the number of the actual targets corresponding to the constant false alarm rate target according to the decision outcome.

4. The method according to claim 3, **characterized in that** the decision formula is expressed by a following formula:

$$Z_i = w_i \cdot Y^H$$

wherein $Z_i$ is a calculation result of the decision formula, $w_i = [w_{0i}, w_{1i}, ... , w_{Ni}]$ is the preset decision coefficients, i is number of sets of the decision coefficient, and Y is the echo signal decision vector.

5. The method according to claim 4, wherein determining the number of the actual targets corresponding to the constant false alarm rate target according to the decision outcome comprises:
determining that the number of the actual targets corresponding to the constant false alarm rate target is one or two according to the calculation result of the decision formula.

6. The method according to claim 1, wherein the preset decision coefficients are two sets of six-tuple parameters.

7. The method according to claim 6, wherein the two sets of six-tuple parameters are:

$$W1 = [-0.01, \quad -0.77, \quad 0.52, \quad 1.46, \quad -1.74].$$

and

$$W2 = [-0.08, \quad -0.08, \quad 0.45, \quad -0.08, \quad 7.01].$$

8. An apparatus for determining number of actual targets corresponding to a constant false alarm rate target, comprising:

an echo signal acquisition unit used for acquiring an echo signal of a signal source;
an echo signal decision vector constructing unit used for constructing an echo signal decision vector of the echo signal; and
a target number determining unit used for determining the number of the actual targets corresponding to the constant false alarm rate target according to the echo signal decision vector and preset decision coefficients.

9. A method for deciding number of actual targets, applied to any constant false alarm rate (CFAR) target point, the method comprising:

presetting the constant false alarm rate target point to have at least two types of corresponding number of preset targets;
acquiring a signal vector of the constant false alarm rate target point;
acquiring a plurality of calculated energies based on the signal vector of the constant false alarm rate target point, wherein the plurality of calculated energies comprise energy of the constant false alarm rate target point, and following energies corresponding to each type: single preset target projection energy, combined preset target projection energy, and energy of each preset target;
constructing a preset target signal vector based on the single preset target projection energy, the combined preset target projection energy, and the energy of each preset target; and
judging the preset target signal vector based on a preset decision rule to determine a type of number of preset targets corresponding to the constant false alarm rate target point.

10. The method according to claim 9, wherein constructing the preset target signal vector based on the single preset target projection energy, the combined preset target projection energy, and the energy of each preset target comprises:

acquiring noise power;

dividing the single preset target projection energy, the combined preset target projection energy, and the energy of each preset target by the noise power, respectively, and respectively converting dividing results into corresponding decibel values; and

constructing the preset target signal vector based on the decibel value and a preset constant.

11. The method according to claim 9, wherein judging the preset target signal vector based on the preset decision rule to determine the type of the number of the preset targets corresponding to the constant false alarm rate target point comprises:

presetting at least one set of decision coefficients;

pre-storing a decision correspondence table corresponding to each set of the decision coefficients;

multiplying each set of decision coefficients by a transpose of the preset target signal vector to obtain a plurality of decision outcomes; and

determining the type of the number of the preset targets corresponding to the constant false alarm rate target point based on each of the decision outcomes and the decision correspondence table.

12. The method according to claim 11, further comprising:

determining, in a test environment, the decision correspondence table corresponding to each set of the decision coefficients based on the preset at least one set of decision coefficients.

13. The method according to claim 11, wherein number of elements in the preset target signal vector is equal to number of elements in each set of the decision coefficients.

14. The method according to any one of claims 9-13, wherein two types in which the number of preset targets corresponding to the preset CFAR target point is 1 or 2 are preset;

when the number of preset targets corresponding to the CFAR target point is 1, the single preset target projection energy is acquired; and

when the number of preset targets corresponding to the CFAR target point is 2, the double preset target projection energy, energy corresponding to a target with larger energy of double preset targets and energy corresponding to a target with smaller energy of the double preset targets are acquired.

15. An integrated circuit, comprising a radio frequency module, an analog signal processing module, and a digital signal processing module sequentially connected; wherein

the radio frequency module is used for generating a radio frequency transmission signal and receiving a radio frequency reception signal;

the analog signal processing module is used for performing down-conversion processing on the radio frequency reception signal to obtain an intermediate frequency signal; and

the digital signal processing module is configured to perform analog-to-digital conversion on the intermediate frequency signal to obtain a digital signal;

wherein the digital signal processing module is further used for deciding the number of the actual targets corresponding to the constant false alarm rate target point based on the method according to claims 1-7 and 9-14.

16. The integrated circuit according to claim 15, wherein the integrated circuit is a millimeter wave chip.

17. A radio equipment comprising:

a carrier;

the integrated circuit according to claim 15 or 16, which is provided on the carrier; and

an antenna, which is provided on the carrier, or is integrated with the integrated circuit as an integral device provided on the carrier;

wherein the integrated circuit is connected with the antenna for transmitting the radio frequency transmission signal and/or receiving the radio frequency reception signal to perform target detection.

18. A terminal device, comprising: a device body; and

the radio equipment according to claim 17 provided on the device body;
wherein the radio equipment is used for target detection and/or communication to provide reference information for operation of the device body.

19. A non-transitory computer-readable storage medium having stored thereon computer-readable instructions that, when executed by a processor, cause the processor to perform the method according to any one of claims 1-7 and 9-14.

FIG. 1

| | |
|---|---|
| Acquire an echo signal of a signal source | S201 |
| ↓ | |
| Construct an echo signal decision vector of the echo signal | S203 |
| ↓ | |
| Determine target number of signal sources based on the echo signal decision vector and preset decision coefficients | S205 |

FIG. 2

| | |
|---|---|
| Calculate a single target projection and a double target projection of the echo signal | S2051 |
| ↓ | |
| Calculate corresponding signal-to-noise ratio indicators of the single target projection, the double target projection, and the echo signal | S2053 |
| ↓ | |
| Construct the echo signal decision vector by using the calculated signal-to-noise ratios | S2055 |

FIG. 3

Echo signal acquisition unit 501

Echo signal decision vector constructing unit 503

Target number determining unit 505

FIG. 4

## INTERNATIONAL SEARCH REPORT

| International application No. |
|---|
| **PCT/CN2023/105741** |

| **A.** | **CLASSIFICATION OF SUBJECT MATTER** |
|---|---|

G01S7/41(2006.01)i; G06F18/24(2023.01)i; G01S7/48(2006.01)i

According to International Patent Classification (IPC) or to both national classification and IPC

| **B.** | **FIELDS SEARCHED** |
|---|---|

Minimum documentation searched (classification system followed by classification symbols)

IPC: G01S G06F

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 恒虚警, 真实, 目标, 数量, 数目, 噪声, 信噪比, 向量, 投影, 能量, constant, false alarm, CFAR, real, target, number, noise, SNR, vector, project+, energy

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 109946665 A (XIDIAN UNIVERSITY) 28 June 2019 (2019-06-28) description, paragraphs [0005]-[0064], and figures 1-5 | 1, 3, 8, 15-19 |
| X | CN 109633598 A (XIDIAN UNIVERSITY) 16 April 2019 (2019-04-16) description, paragraphs [0039]-[0083], and figures 1-3 | 1, 3, 8, 15-19 |
| A | CN 105425224 A (DALIAN ROILAND TECHNOLOGY CO., LTD.) 23 March 2016 (2016-03-23) entire document | 1-19 |
| A | US 2022114363 A1 (IMEC VZW et al.) 14 April 2022 (2022-04-14) entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 August 2023** | **01 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/105741**

| Patent document cited in search report | | | Publication date (day/month/year) | Patent family member(s) | Publication date (day/month/year) |
|---|---|---|---|---|---|
| CN | 109946665 | A | 28 June 2019 | None | |
| CN | 109633598 | A | 16 April 2019 | None | |
| CN | 105425224 | A | 23 March 2016 | None | |
| US | 2022114363 | A1 | 14 April 2022 | None | |

Form PCT/ISA/210 (patent family annex) (July 2022)